# EUROPÄISCHE PATENTANMELDUNG

(11) **EP 1 288 441 A1**
(43) Veröffentlichungstag der Anmeldung: **05.03.2003**
(21) Anmeldenummer: 01121088.7
(22) Anmeldetag: 03.09.2001
(51) Int. Cl.: F01D 9/02

(54) **Übergangsabschnitt einer Gasturbinenbrennkammer**

(71) Anmelder: SIEMENS AKTIENGESELLSCHAFT, 80333 München (DE)
(72) Erfinder: Tiemann, Peter, 58452 Witten (DE)

(57) **Zusammenfassung**

Die Erfindung betrifft eine Gasturbine (1) mit einer Brennkammeranordnung und einem der Brennkammeranordnung nachgeschalteten Turbinenraum (2), wobei die Brennkammeranordnung aus einer Vielzahl von aus Eingangsabschnitten (4) und in einen zum Turbinenraum überleitenden Ringspalt überblendenden Übergangsabschnitten (5) gebildeten Einzelbrennkammern (3) bestehen und wobei die Längsachsen (B) der Einzelbrennkammern relativ zu einer durch die axiale Erstreckung des Turbinenraums (2) bestimmten Maschinenachsen (M) unter einem Winkel angestellt sind. Um eine solche Gasturbine dahingehend zu verbessern, daß die thermischen und mechanischen Belastungen der Einzelbrennkammern im Übergangsabschnitt deutlich reduziert und somit Kühlanforderungen in diesem Bereich herabgesetzt werden können, wird mit der Erfindung vorgeschlagen, daß der Übergangsabschnitt (5) wenigstens einer Einzelbrennkammer (3) und ein korrespondierender Eingangsbereich (9) des Turbinenraums (2) so ausgebildet sind, daß eine Umlenkung des aus der wenigstens einen Einzelbrennkammer (3) in den Turbinenraum (2) einströmenden Gasstromes in Richtung der Maschinenachse (M) im wesentlichen im Eingangsbereich (9) des Turbinenraums (2) erfolgt.

## Beschreibung

Die Erfindung betrifft eine Gasturbine mit einer Brennkammeranordnung und einem der Brennkammeranordnung nachgeschalteten Turbinenraum, wobei die Brennkammeranordnung aus einer Vielzahl von aus Eingangsabschnitten und in einen zum Turbinenraum überleitenden Ringspalt überblendenden Übergangsabschnitten besteht und wobei die Längsachsen der Einzelbrennkammern relativ zu einer durch die axiale Ausrichtung des Turbinenraums bestimmten Maschinenachse unter einem Winkel angestellt sind.

Derartige Gasturbinen sind im Stand der Technik bekannt. Mit einem den Einzelbrennkammern der Brennkammeranordnung jeweils vorgeschalteten Brenner wird ein Gemisch aus Treibstoff und sauerstoffhaltigem Brenngas gezündet, welches in den Einzelbrennkammern der Brennkammeranordnung verbrennt. Die bei der Verbrennung des Gemisches aus Brenngas und Treibstoff entstehenden Heißgase expandieren und werden in Richtung des der Brennkammeranordnung nachgeschalteten Turbinenraumes beschleunigt. Die Einzelbrennkammern bestehen dabei aus einem Eingangsabschnitt von allgemein zylindrischer Form und einem Übergangsabschnitt, in welchem der Heißgasstrom mit kreisförmigem Querschnitt in einen Heißgasstrom mit kreisringsegmentförmigem Querschnitt überblendet wird, so daß am Ende der Vielzahl von Einzelbrennkammern ein Heißgasstrom mit insgesamt kreisringförmigem Querschnitt gebildet wird. Dieser tritt in den Turbinenraum ein und trifft dort auf eine Anordnung aus Leitschaufeln und Laufschaufeln, wobei er letztere zur Bewegung antreibt. Mit diesem Prinzip wird die Rotation einer mit den Laufschaufeln verbundenen Turbinenwelle erreicht, welche für verschiedene Zwecke, beispielsweise zur Stromerzeugung oder für den Vortrieb eines Strahlflugzeuges verwendet werden kann.

Aus konstruktiven Gründen werden die Einzelbrennkammern der Brennkammeranordnung winkelig zu einer durch die axiale Ausrichtung des Turbinenraumes bestimmten Maschinenachse angestellt. Durch diese Abwinklung bedingt müssen die Heißgasströme, die zunächst entlang der Achse der Einzelbrennkammer verlaufen, in Richtung der Maschinenachse umgelenkt werden.

Eine solche Anordnung einer Einzelbrennkammer mit einem Übergang in den Turbinenraum einer Gasturbine ist in der US 4,719,748 offenbart. Bei der dort dargestellten Anordnung wird der in einem zylinderförmigen Eingangsabschnitt der Einzelbrennkammern generierte Heißgasstrom über einen Übergangsabschnitt in Richtung eines Turbinenraumes umgelenkt, wobei der ringförmige, in den Turbinenraum führende Eingangsspalt im wesentlichen koaxial mit der Maschinenachse ausgerichtet ist. Eine Umlenkung des Heißgasstromes von der winklig zur Maschinenachse verlaufenden Achse der Einzelbrennkammer in Richtung einer Richtung parallel zur Maschinenachse erfolgt bei dieser Anordnung im Übergangsabschnitt der Einzelbrennkammern. Hierzu sind die inneren, in Richtung der Turbinenwelle gelegenen Wandungen und die äußeren, entfernt von der Turbinenwelle gelegenen Wandungen der Übergangsabschnitte mit entsprechenden Umlenkungen ausgebildet, die den Heißgasstrom aus der parallel zur Brennkammerachse verlaufenden Strömungsrichtung in eine parallel zur Maschinenachse verlaufenden Strömungsrichtung zwingen. Problematisch bei dieser Vorgehensweise ist, daß im Bereich der mit vergleichsweise kleinen Radien ausgebildeten Umlenkungen der Heißgasstrom auf die Wandung der Einzelbrennkammern im Eingangsbereich auftrifft und diese einer verstärkten mechanischen sowie thermischen Belastung aussetzt. Dies führt zu einer starken Erwärmung der Einzelbrennkammern im Übergangsabschnitt, was wiederum eine verstärkte Kühlung erfordert. In der genannten US 4,719,748 wird dies durch eine einen Druckabfall erfordernde Prallkühlung im Bereich des Übergangsabschnittes berücksichtigt. Die zur Kühlung eines solchermaßen geformten Übergangsabschnittes der Einzelbrennkammern erforderlichen Druckabfälle bzw. die erforderlichen Mengen an zusätzlichem Kühlgas verringern insgesamt die Turbineneffizienz und werden daher als nachteilig empfunden. Darüber hinaus erfordert die in der US 4,719,748 gezeigte Kühlung der Einzelbrennkammern einen erhöhten konstruktiven Aufwand, da diese über ihre gesamte Länge mit einem doppelschaligen Gehäuse versehen werden müssen.

Ausgehend von diesem Stand der Technik ist es Aufgabe der Erfindung, eine Gasturbine zu schaffen, bei der die thermischen und mechanischen Belastungen der Einzelbrennkammern im Übergangsabschnitt deutlich reduziert und somit Kühlanforderungen in diesem Bereich herabgesetzt werden können.

Zur Lösung dieser Aufgabe wird mit der Erfindung vorgeschlagen, daß der Übergangsabschnitt wenigstens einer Einzelbrennkammer und ein korrespondierender Eingangsbereich des Turbinenraums so ausgebildet sind, daß eine Umlenkung des aus der mindestens einer Einzelbrennkammer in den Turbinenraum einströmenden Gasstroms in Richtung der Maschinenachse im wesentlichen im Eingangsbereich des Turbinenraums erfolgt.

Dadurch, daß die Umlenkung des Heißgasstromes in Richtung der Maschinenachse durch die erfindungsgemäße Ausbildung des Übergangsabschnittes der Einzelbrennkammer und des Eingangsbereiches des Turbinenraumes nicht mehr nahezu vollständig im Übergangsabschnitt der Einzelbrennkammer vorgenommen wird, sondern im wesentlichen in den Eingangsbereich des Turbinenraumes verlagert wird, werden nun die im Eingangsbereich des Turbinenraumes angeordneten Turbinenelemente, insbesondere die dort angeordneten Leitschaufeln den mit der Umlenkung verbundenen mechanischen und thermischen Belastungen ausgesetzt. Diese Elemente, die aufgrund der ohnehin gegebenen thermischen Beanspruchung als Gußelemente ausgebildet sind, können die aufgrund der Umlenkung des Gasstromes zusätzlich auftretenden thermischen Belastungen jedoch wesentlich besser abführen als die durch Umformung ausgebildeten Übergangsabschnitte der Brennkammern. Diese werden durch die im Bereich des Übergangsabschnittes im wesentlichen gerade geführten Heißgasströme thermisch so stark entlastet, daß der Kühlaufwand in diesem Bereich merklich reduziert werden kann. Die Materialbeanspruchung der Einzelbrennkammer in dem Übergangsabschnitt wird damit verglichen zum Stand der Technik herabgesetzt, was sich insgesamt günstig auf die Haltbarkeit und Lebensdauer dieses Bauteils auswirkt. Die Möglichkeit, auf verstärkte Bemühungen hinsichtlich einer Kühlung des Übergangsabschnittes der Einzelbrennkammer verzichten zu können, erleichtert deren Konstruktion und erlaubt insbesondere größere konstruktive Freiheiten.

Gemäß einer vorteilhaften Weiterbildung der Erfindung weist der Übergangsabschnitt der mindestens einen Einzelbrennkammer jeweils eine innere, näher zu einer Turbinenwelle gelegene und eine äußere, weiter entfernt von der Turbinenwelle gelegene Wandung auf, wobei die innere und äußere Wandung der Einzelbrennkammer im wesentlichen geradlinig oder sanft in Richtung der Maschinenachse umgebogen verlaufen. Eine sanfte Biegung in Richtung der Maschinenachse bedeutet eine Biegung mit großem Radius, bei der die Umlenkung des Heißgasstromes in einem weitläufigen Bogen erfolgt, so daß thermische Belastungsspitzen in diesen Bereichen vermieden werden können. Bei einer im wesentlichen geradlinigen Führung der inneren bzw. äußeren Wandung des Übergangsabschnittes entfallen thermische und mechanische Zusatzbelastungen aufgrund der Umlenkung des Gasstromes im wesentlichen ganz.

In einer möglichen Ausgestaltung der Erfindung verläuft die äußere Wandung des Übergangsabschnittes der Einzelbrennkammer im wesentlichen geradlinig, wohingegen die innere Wandung sanft gebogen, das heißt mit einem großen Radius ausgeführt ist.

Gemäß einem weiteren vorteilhaften Merkmal der Erfindung sind in dem Turbinenraum Leitschaufeln mit im wesentlichen parallel zur Maschinenachse ausgerichteten Leitschaufelplattformen angeordnet, wobei wenigstens eine Leitschaufelplattform im Eingangsbereich des Turbinenraums in Richtung der Brennkammerlängsachse abgewinkelt verläuft. Auf diese Weise übernehmen die abgewinkelt bzw. aufgebogen verlaufenden Leitschaufelplattformen die Umlenkung des Heißgasstromes und fangen die durch die Umlenkung auftretenden zusätzlichen thermischen und mechanischen Belastungen ab. Da die Leitschaufeln wie oben bereits erwähnt Gußteile und als solche mit einer hervorragenden thermischen Leitfähigkeit versehen sind, können an dieser Stelle auftretende zusätzliche thermische Belastungen aufgrund der Umlenkung des Heißgasstromes einfach abgeführt und mit vergleichsweise einfachen Kühlmaßnahmen aufgefangen werden.

Gemäß einer weiteren vorteilhaften Weiterbildung der Erfindung können zur weiteren Entlastung des Übergangsabschnittes der Einzelbrennkammer die Leitschaufelplattformen im Eingangsbereich in Richtung der Einzelbrennkammern verlängert sein. Auf diese Weise kann der Heißgasstrom bereits sehr früh auf die verlängerten Bereiche der Leitschaufelplattformen auftreffen und durch diese Elemente in Richtung der Maschinenachse umgelenkt werden. Mit einer solchen in Richtung der Einzelbrennkammer verlängerten Leitschaufelplattform im Eingangsbereich des Turbinenraums kann zudem der Radius, in dem die Umlenkung des Heißgasstromes erfolgt, vergrößert und damit die bei der Umlenkung der entstehenden thermischen und mechanischen Belastungen über einen größeren Bereich verteilt werden.

Bei einer weiteren Ausgestaltungsform der Gasturbine der Erfindung sind Leitschaufelplattformen im Turbinenraum in Form von inneren und äußeren Leitschaufelplattformen vorgesehen, wobei die inneren Leitschaufelplattformen nahe an der Turbinenwelle, die äußeren Plattformen weiter von dieser entfernt angeordnet sind. Zur Umlenkung des Heißgasstromes kann/können dabei wenigstens eine innere und/oder wenigstens eine äußere Leitschaufelplattform zur Maschinenachse abgewinkelt und/oder verlängert ausgebildet sein.

Eine zusätzliche Reduzierung der thermischen und mechanischen Belastung der Einzelbrennkammer in dem Übergangsabschnitt ergibt sich, wenn wie gemäß einer weiteren vorteilhaften Weiterbildung der Erfindung vorgesehen die Querschnittsfläche der Einzelbrennkammer in Richtung des Gasstromes im wesentlichen konstant ist. Durch Vermeidung von Querschnittsflächenverkleinerungen in Richtung des Heißgasstromes werden die aus Verengungen des Querschnittes resultierenden zusätzlichen thermischen und mechanischen Belastungen der Einzelbrennkammerwandungen im Bereich des Übergangsabschnittes reduziert.

Bevorzugt werden bei einer Gasturbine sämtliche Einzelbrennkammern und korrespondierende Eingangsbereiche mit einem oder mehreren der oben beschriebenen Merkmale ausgeführt.

Weitere Merkmale und Vorteile der Erfindung ergeben sich aus der nachfolgenden Beschreibung von Ausführungsbeispielen anhand der beigefügten Figuren. Dabei zeigen:
- Figur 1: in einem Ausschnitt den Übergang zwischen einer Einzelbrennkammer und dem Turbinenraum in einem ersten Ausführungsbeispiel einer erfindungsgemäßen Gasturbine und
- Figur 2: in einem dem Ausschnitt aus Figur 1 entsprechenden Ausschnitt den Übergang zwischen einer Einzelbrennkammer und dem Turbinenraum bei einem zweiten Ausführungsbeispiel einer erfindungsgemäßen Gasturbine.

In den Figuren sind gleiche Teile mit gleichen Bezugszeichen versehen.

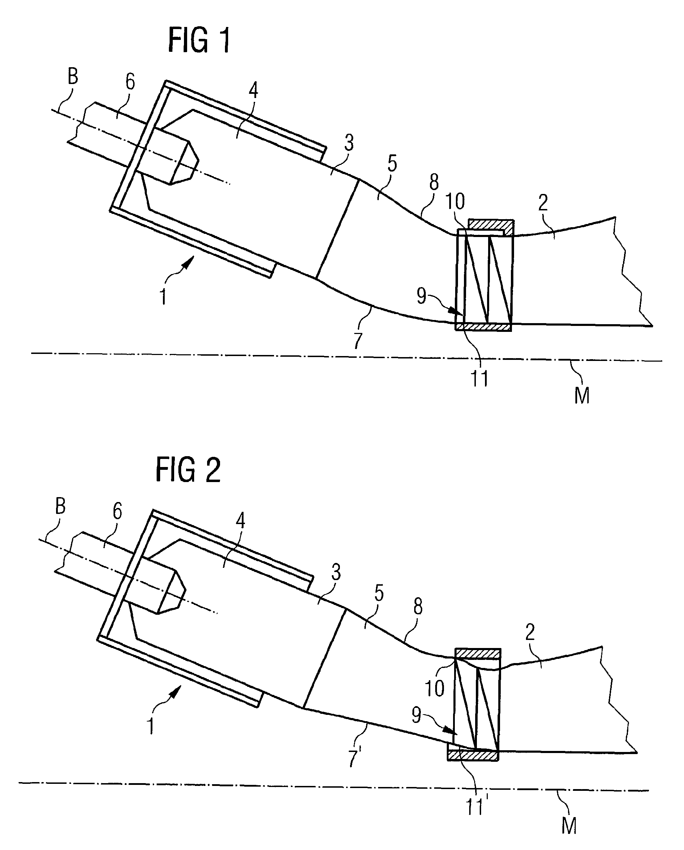

In Figur 1 ist in einem ersten Ausführungsbeispiel ein Ausschnitt aus einer erfindungsgemäßen Turbine 1 dargestellt. Zu erkennen ist eine Einzelbrennkammer 3 im Übergang zu einem Turbinenraum 2 der Gasturbine 1. Die Einzelbrennkammer 3 setzt sich zusammen aus einem Eingangsabschnitt 4 und einem Übergangsabschnitt 5. Der Eingangsabschnitt 4 ist dabei zylindrisch mit kreisförmiger Grundfläche ausgebildet, der Übergangsabschnitt 5 blendet den kreisförmigen Querschnitt des Eingangsabschnittes 4 in einem Querschnitt mit der Form eines Abschnittes eines Kreisringsegmentes über. In der erfindungsgemäßen Gasturbine 1 sind mehrere derartige Einzelbrennkammern 3 angeordnet, welche austrittsseitig der Übergangsabschnitte 5 einen Ringspalt definieren, der in den Turbinenraum 2 überleitet.

Der Einzelbrennkammer 3 ist ein Brenner 6 vorgeschaltet, welcher ein Gemisch aus einem sauerstoffhaltigen Brenngas und einem Treibstoff zündet. Die eigentliche Verbrennung findet dann in den Einzelbrennkammern 3 der Gasturbine 1 statt, wobei entstehende Heißgase entlang der Einzelbrennkammer durch die Eingangsabschnitte 4 und die Übergangsabschnitte 5 in Richtung des Turbinenraums 2 propagieren. Die Einzelbrennkammer 3 erstreckt sich in axialer Ausdehnung im wesentlichen entlang einer Brennkammerachse B, welche zu einer in Längsrichtung des Turbinenraums 2 ausgerichteten Maschinenachse M winklig angeordnet ist.

Wegen dieser winkligen Anordnung der Einzelbrennkammern 3 mit Bezug auf die Maschinenachse M ist es erforderlich, den in den Einzelbrennkammern 3 entstehenden und in Richtung des Turbinenraums 2 propagierenden Heißgasstrom umzulenken, so daß dieser parallel zur Maschinenachse M auf die im Turbinenraum2 angeordneten Leitschaufeln und Laufschaufeln trifft. Diese Umlenkung wird bei der vorliegenden Anordnung im wesentlichen in einem Eingangsbereich 9 am Eingang des Turbinenraumes vorgenommen. Dabei ist eine äußere, von der Turbinenwelle entfernt gelegene Wandung 8 des Übergangsabschnittes 5 der Einzelbrennkammer 3 im wesentlichen geradlinig geführt, sie bietet für den Heißgasstrom keine Angriffsfläche. In diesem oberen Bereich wird die Umlenkung des Heißgasstromes durch eine in Richtung der Einzelbrennkammern 3 abgewinkelte äußere Leitschaufelplattform 10 bewerkstelligt. Die innere Wandung 7, welche näher an der Turbinenwelle gelegen ist, verläuft im gezeigten Ausführungsbeispiel sanft gebogen, daß heißt mit einer Biegung mit großem Radius. Entlang dieser Biegung erfolgt bereits eine erste sanfte Umlenkung des Heißgasstroms, welche im Eingangsbereich 9 zum Turbinenraum 2 abgeschlossen wird. Durch die gezeigte Ausgestaltung des Systems Übergangsabschnitt 5 der Einzelbrennkammer 3 und Eingangsbereich 9 des Turbinenraums 2, bei der die wesentliche Umlenkung des Heißgasstroms im Eingangsbereich 9 des Turbinenraums 2 erfolgt, treten die durch die Umlenkung des Heißgasstromes erzeugten thermischen Belastungen zu großen Teilen im Eingangsbereich 9 des Turbinenraums 2 auf. Dort werden sie insbesondere von den Leitschaufelplattformen 10 und 11 abgefangen, welche als Gußteile eine hervorragende thermische Leitfähigkeit aufweisen und damit ohne hohen zusätzlichen Kühlaufwand auch von dieser zusätzlichen thermischen Last herabgekühlt werden können. Die geformten Einzelbrennkammern 3 und dabei insbesondere die Übergangsabschnitte 5 werden thermisch entlastet, was zu einer deutlichen Reduzierung der Kühlanforderungen in diesem Bereich und damit einer konstruktiven Vereinfachung und einer Verbilligung dieses Bauteils führt.

Das in Figur 2 dargestellte weitere Ausführungsbeispiel der Erfindung unterscheidet sich von dem in Figur 1 gezeigten Ausführungsbeispiel in der Ausbildung der inneren Wandung 7' des Übergangsabschnittes 5 der Einzelbrennkammer 3 sowie der Führung der inneren Leitschaufelplattform 11' im Eingangsbereich 9 des Turbinenraums 2. Bei diesem Ausführungsbeispiel ist neben der äußeren Leitschaufelplattform 10 auch die innere Leitschaufelplattform 11' in Richtung der Brennkammer 3 umgebogen, die innere Wandung 7' ist entsprechend flacher geführt. Durch diese Maßnahme wird ein zusätzlicher Teil der erforderlichen Umlenkung des Heißgasstromes von dem Übergangsabschnitt 5 der Einzelbrennkammer 3 in den Eingangsbereich 9 des Turbinenraums 2 und damit in einen thermisch belastbareren Teil der Gasturbine 1 verlagert. Dies führt zu einer weiteren Entlastung der Einzelbrennkammern 3 mit den oben beschriebenen Vorteilen.

In beiden gezeigten Ausführungsbeispielen können die äußere Leitschaufelplattform 10 bzw. die inneren Leitschaufelplattformen 11 bzw. 11' in Richtung der Einzelbrennkammern 3 verlängert sein, um noch besser für eine thermische Entlastung der Einzelbrennkammern 3 in dem kritischen Bereich der Umlenkung des Heißgasstromes zu sorgen.

Mit der Erfindung wird eine Gasturbine bereitgestellt, bei der durch Verlagerung der Umlenkung des Heißgasstromes in Richtung des Turbinenraums 2 eine Entlastung der Übergangsabschnitte 5 der Einzelbrennkammern 3 erfolgt, was zu merklich verringerten Kühlanforderungen in diesem Bereich führt. Die bei der Erfindung die thermischen Belastungen tragenden Leitschaufelplattformen sind als Gußteile erheblich einfacher zu kühlen als die geformten Brennkammern, so daß der zur Kühlung zu betreibende Aufwand insgesamt verringert wird.

## Patentansprüche

1. Gasturbine mit einer Brennkammeranordnung und einem der Brennkammeranordnung nachgeschalteten Turbinenraum (2), wobei die Brennkammeranordnung aus einer Vielzahl von aus Eingangsabschnitten (4) und in einen zum Turbinenraum (2) überleitenden Ringspalt überblendenden Übergangsabschnitten (5) zusammengesetzten Einzelbrennkammern (3) besteht und wobei die Längsachsen (B) der Einzelbrennkammern (3) relativ zu einer durch die axiale Ausdehnung des Turbinenraums (2) bestimmten Maschinenachse (M) unter einem Winkel angestellt sind,
**dadurch gekennzeichnet, daß** der Übergangsabschnitt (5) wenigstens einer Einzelbrennkammer (3) und ein korrespondierender Eingangsbereich (9) des Turbinenraums (2) so ausgebildet sind, daß eine Umlenkung des aus der mindestens einen Einzelbrennkammer (3) in den Turbinenraum (2) einströmenden Gasstroms in Richtung der Maschinenachse (M) im wesentlichen im Eingangsbereich (9) des Turbinenraums (2) erfolgt.

2. Gasturbine nach Anspruch 1,
**dadurch gekennzeichnet, daß** der Übergangsabschnitt (5) der wenigstens einen Einzelbrennkammer (3) eine innere, näher zu einer Turbinenwelle gelegene Wandung (7; 7') und eine äußere, weiter entfernt von der Turbinenwelle gelegene Wandung (8) aufweist, wobei die innere (7; 7') und äußere (8) Wandung im wesentlichen geradlinig oder sanft in Richtung der Maschinenachse (M) umgebogen verlaufen.

3. Gasturbine nach Anspruch 2,
**dadurch gekennzeichnet, daß** die äußere Wandung (8) des Übergangsabschnittes (5) im wesentlichen geradlinig verläuft.

4. Gasturbine nach einem der Ansprüche 2 oder 3,
**dadurch gekennzeichnet, daß** die innere Wandung (7; 7') des Übergangsabschnittes (5) unter einem großen Radius sanft gebogen verläuft.

5. Gasturbine nach einem der voranstehenden Ansprüche, **gekennzeichnet durch** in dem Turbinenraum angeordnete Leitschaufeln mit im wesentlichen parallel zur Maschinenachse (M) ausgerichteten Leitschaufelplattformen, wobei wenigstens eine Leitschaufelplattform (10, 11; 11') im Eingangsbereich (9) des Turbinenraums (2) in Richtung der Brennkammerlängsachse (B) angewinkelt sind.

6. Brennkammer nach Anspruch 5,
**dadurch gekennzeichnet, daß** wenigstens eine Leitschaufelplattform (19, 11; 11') im Eingangsbereich (9) des Turbinenraums (2) in Richtung der Einzelbrennkammern (3) verlängert ist.

7. Gasturbine nach einem der Ansprüche 5 und 6,
**dadurch gekennzeichnet, daß** in dem Turbinenraum innere, nahe der Turbinenwelle gelegene und äußere, weiter von der Turbinenwelle entfernt gelegene Leitschaufelplattformen angeordnet sind und daß im Eingangsbereich (9) des Turbinenraums (2) wenigstens eine innere (11; 11') und/oder wenigstens eine äußere (10) Leitschaufelplattform in Richtung der Brennkammerlängsachse (B) abgewinkelt ist/sind und/oder in Richtung der Einzelbrennkammern (3) verlängert ist/sind.

8. Gasturbine nach einem der voranstehenden Ansprüche,
**dadurch gekennzeichnet, daß** die Querschnittsfläche der Einzelbrennkammer (3) in Gasströmrichtung im wesentlichen konstant ist.

9. Gasturbine nach einem der voranstehenden Ansprüche,
**dadurch gekennzeichnet, daß** die Übergangsabschnitte (5) aller Einzelbrennkammern (3) und alle korrespondierenden Eingangsbereiche (9) des Turbinenraums (2) so ausgebildet sind, daß eine Umlenkung der aus den Einzelbrennkammern (3) in den Turbinenraum (2) einströmenden Gasströme in Richtung der Maschinenachse (M) im wesentlichen in den Eingangsbereichen (9) des Turbinenraums (2) erfolgt.
